# EUROPEAN PATENT APPLICATION

(11) **EP 1 164 652 A1**
(43) Date of publication of application: **19.12.2001**
(21) Application number: 00112529.3
(22) Date of filing: 13.06.2000
(51) Int. Cl.: H01M 8/12

(54) **Verfahren zum Aufbringen einer Festelektrolytschicht auf eine Elektrode**

(71) Applicant: SIEMENS AKTIENGESELLSCHAFT, 80333 München (DE); FORSCHUNGSZENTRUM JÜLICH GMBH, 52425 Jülich (DE)
(72) Inventor: Buchkremer, Dr. Hans Peter, 52525 Heinsberg (DE); Flesch, Udo, 52428 Jülich (DE); Fleck, Robert, 91325 Adelsdorf (DE); Jansing, Thomas, 90425 Nürnberg (DE)
(74) Representative: Zedlitz, Peter, Dipl.-Inf.

(57) **Zusammenfassung**

Bei dem Verfahren wird insbesondere auf eine poröse Elektrode (16) für eine festkeramische Brennstoffzelle eine Feststoffschicht (18) aus Festelektrolytmaterial aufgebracht, wobei die Feststoffschicht (18) durch Einstrahlung von Mikrowellen gesintert wird, so dass sich eine dünne und gasdichte Festelektrolytschicht ausbildet. Die Verwendung von Mikrowellen erlaubt eine sehr kurze Sinterzeit, eine geringe Sintertemperatur und verhindert damit die Ausbildung einer für die Ionenleitfähigkeit nachteilige Fremdphasenschicht zwischen der Elektrode (16) und der Festelektrolytschicht.

## Description

Die Erfindung betrifft ein Verfahren zum Aufbringen einer Festelektrolytschicht auf eine Elektrode, insbesondere auf eine poröse Elektrode für eine festkeramischen Brennstoffzelle, bei der auf die Elektrode eine Feststoffschicht aus Festelektrolytmaterial aufgebracht wird.

Eine Brennstoffzelle umfasst regelmäßig eine Anode und eine Kathode, zwischen denen eine Elektrolytschicht aufgebracht ist. Über die Anodenoberfläche wird ein Brennstoff und über die Kathodenoberfläche wird Sauerstoff geleitet. Über die Elektrolytschicht findet ein Ionenaustausch zwischen dem Brennstoff und dem Sauerstoff statt, so dass sich zwischen Anode und Kathode eine Spannung ausbildet.

Entscheidend für die Effizienz einer Brennstoffzelle ist u.a. die Elektrolytschicht, welche einerseits gut leitfähig für die Ionen sein muss und andererseits weitgehend gasundurchlässig sein sollte, um einen Gasaustausch zwischen Brennstoff und Sauerstoff zu verhindern. An die Elektrolytschicht werden daher hohe Anforderungen gestellt.

Bei sogenannten festkeramischen Brennstoffzellen (SOFC: Solid Oxide Fuel Cell) ist die Anode sowie die Kathode aus einem porösen keramischen Material gebildet, zwischen denen eine Festelektrolytschicht angeordnet ist. Es sind festkeramische Brennstoffzellen mit einer planaren Geometrie bekannt, bei der die Anode und die Kathode im Wesentlichen planparallel zueinander verlaufen. Daneben ist auch eine zylindrische oder röhrenförmige Ausgestaltung bekannt, bei der die Anode die zylindrisch ausgebildete Kathode unter Einschluss der Festelektrolytschicht umschließt.

Zum Aufbringen der Festelektrolytschicht sind eine Vielzahl von Verfahren bekannt. Aus der DE 196 09 418 C2 ist beispielsweise zu entnehmen, auf eine plane Elektrode eine Suspension aufzubringen, die Feststoffanteile aus Festelektrolytmaterial enthält. Überschüssiges Lösungsmittel wird durch Erzeugen eines Unterdrucks auf der der Suspension gegenüberliegenden Seite der porösen Elektrode abgeführt. Die Suspension weist hierbei grobe und feine Feststoffanteile auf, wobei die groben Feststoffanteile zunächst die Poren der Elektrode zusetzen und für eine gute Anbindung zwischen der Elektrolytschicht und der Elektrode sorgen. Die feinen Anteile scheiden sich anschließend auf den groben Anteilen ab und es ist eine Feststoffschicht aus Festelektrolytmaterial gebildet. Die Feststoffschicht wird getrocknet und anschließend zur Ausbildung der Festelektrolytschicht gesintert. Für den Sintervorgang ist eine Aufheizung bis 1300-1500°C mit einer Aufheizrate von 1-5 K/min und eine Haltezeit bei 1300-1500°C von 5-24 Stunden vorgesehen. Im Anschluss daran erfolgt eine Abkühlung bis auf Raumtemperatur mit einer Abkühlrate von 1-5 K/min.

Aus der DE 196 09 418 C2 ist zudem zu entnehmen, dass es bekannt ist, die Elektrolytschicht mittels Elektrophorese oder mittels Foliengießen herzustellen.

Aus dem Aufsatz "Status of Solide Oxide Fuel Cell Technologie" von S.C. Singhal, entnommen aus: High Temperature Electrochemistry: Ceramics and Metals, 17^{th} Reso International Symposium und Material Sience, Roskilde, Denmark, September 1996, ist zum Aufbringen der Elektrolytschicht ein EVD-Prozess bekannt (EVD: Electrochemical Vapor Deposition). Der EVD-Prozess ist jedoch sehr teuer und aufwendig.

Aus diesem Dokument ist der prinzipielle Aufbau einer röhrenförmigen Brennstoffzelle zu entnehmen. Diese umfasst als Kathode einen porösen keramischen Innenzylinder, auf dem die Elektrolytschicht und anschließend die Anode als Mantel aufgebracht ist. Zur elektrischen Verbindung von zwei Brennstoffzellen in Serie wird die Anode der einen Brennstoffzelle direkt mit einem sogenannten Interkonnektor der zweiten Brennstoffzelle verbunden, wobei die Elektrolytschicht und die Anode der Brennstoffzellen im Bereich des Interkonnektors unterbrochen sind. Aus dem genannten Aufsatz ist zu entnehmen, dass sowohl die Elektrolytschicht als auch der Interkonnektor und die Anode üblicherweise mittels des EVD-Prozesses aufgebracht werden. Der Aufsatz befasst sich mit dem Problem, den teueren EVD-Prozess durch andere Beschichtungssysteme zu ersetzen. Während heute, wie im Aufsatz vorgeschlagen, neue Beschichtungsverfahren für den Interkonnektor und für die Anode entwickelt und auch eingesetzt werden, ist für die Elektrolytschicht weiterhin der EVD-Prozess vorgesehen, um eine ausreichend hohe Qualität zu gewährleisten.

Der Erfindung liegt die Aufgabe zugrunde, ein einfaches Verfahren zum Aufbringen einer qualitativen hochwertigen Festelektrolytschicht auf eine Elektrode anzugeben.

Die Aufgabe wird gemäß der Erfindung gelöst indem auf die Elektrode, insbesondere auf eine poröse Elektrode für eine festkeramische Brennstoffzelle, eine Feststoffschicht aus Festelektrolytmaterial aufgebracht wird, wobei zur Ausbildung der Festelektrolytschicht die Feststoffschicht durch Einstrahlung von Mikrowellen gesintert wird.

Diesem Verfahren liegt die Erkenntnis zugrunde, dass bei dem bekannten herkömmlichen Sinterverfahren das Problem besteht, dass sich eine Fremdphasenschicht zwischen Elektrode und der Festelektrolytschicht ausbildet. Durch diese Fremdphasenschicht wird der Widerstand für die Ionen und für die Elektronenleitung im Übergangsbereich Elektrolytschicht/Elektrode erhöht, was sich nachteilig auf die Effizienz der Brennstoffzelle auswirkt.

Die Ursache für die Ausbildung der Fremdphasenschicht ist in Diffusionsprozessen zwischen dem Elektrolytmaterial und der Elektrode zu sehen. Die Diffusion ist temperaturabhängig und nimmt mit der Temperatur und der Zeitdauer des Sinterprozesses zu. Beim herkömmlichen Sinterverfahren mit einer Sintertemperatur von etwa 1400°C und Haltezeiten von ca. 5h in einem in der Regel widerstandbeheizten Sinterofen finden diese Diffusionsprozesse verstärkt statt. Hohe Sintertemperatur über längere Zeit gehalten fördern zwar das Verdichten der Elektrolytschicht. Sie bewirken aber, dass aufgrund der langen Prozesszeit des gesamten Sinterverfahrens, bei dem bereits die Haltezeit auf dem Temperaturniveau von 1400°C 5 Stunden beträgt, die Diffusionsprozesse über einen langen Zeitraum erfolgen, in dem sich die Fremdphasenschicht ausbildet.

Durch das hier vorgeschlagene Sintern mittels Mikrowellen, kurz als Mikrowellensintern bezeichnet, ist es demgegenüber in vorteilhafter Weise ermöglicht, den Sinterprozess sehr rasch und bei vergleichsweise geringen Temperaturen durchzuführen. Im Vergleich zum herkömmlichen Sinterverfahren wird zudem eine höhere Verdichtung erreicht. Diese drei Aspekte, nämlich geringe Sintertemperatur, geringe Prozesszeit und hohe Verdichtung, ermöglichen in überraschender Weise mittels des relativ einfachen und kostengünstigen Mikrowellensinterns auf eine Elektrode einer Brennstoffzelle eine Festelektrolytschicht aufzubringen, die eine sehr hohe Qualität aufweist. Die Ausbildung einer Fremdphasenschicht zwischen Elektrode und Elektrolytschicht wird verhindert. Die Ursache hierfür liegt im Verhindern von Diffusionsprozessen zwischen dem Elektrolytmaterial und der Elektrode aufgrund der niedrigen Sintertemperatur und der kurzen Prozesszeit.

Neben diesen technischen Vorteilen bietet das Mikrowellensintern darüber hinaus auch entscheidende wirtschaftliche Vorteile, da einerseits eine Vorrichtung zum Mikrowellensintern im Vergleich zu einem widerstandsbeheizten Sinterofen kostengünstiger ist, und da andererseits aufgrund eines geringen Energie- und Zeitbedarfs nur geringe Verfahrenskosten anfallen.

Um den gesamten Sinterprozess inklusive Aufheizen und Abkühlen möglichst optimiert führen zu können, wird die Mikrowellenleistung vorzugsweise in Abhängigkeit einer für die Feststoffschicht ermittelten Temperatur zur Ausbildung eines bestimmten Temperaturverlaufs eingestellt. Der Temperaturverlauf entlang einer optimierten Verlaufskurve gewährleistet eine qualitativ hochwertige Festelektrolytschicht.

Für ein gutes Sinterergebnis wird vorzugsweise eine Sintertemperatur im Bereich von etwa 1100°C bis 1300°C eingestellt. Im Vergleich zu herkömmlichen widerstandbeheizten Sinteröfen, bei denen üblicherweise Temperaturen von 1400°C notwendig sind, ist lediglich eine um 100-300°C reduzierte Sintertemperatur erforderlich. Durch diese vergleichsweise niedrige Temperatur sind die Diffusionsprozesse zur Ausbildung einer Fremdphasenschicht nahezu eingefroren.

Zur Verdichtung der Elektrolytschicht wird die Sintertemperatur lediglich etwa 20 Min bis 120 Min gehalten. Im Vergleich zu der bekannten Sinterzeit von 5 Stunden ist also die eigentliche Sinterzeit etwa bis um den Faktor 15 reduziert. Durch diese extrem kurze Sinterzeit in Verbindung mit der niedrigen Sintertemperatur ist die Ausbildung einer Fremdphasenschicht verhindert.

In einer bevorzugten Ausführung liegt die Aufheizrate und/oder die Abkühlrate im Bereich von etwa 10K/min bis 20K/min. Selbst die Aufheizrate und Abkühlrate beim Mikrowellensintern sind demnach deutlich schneller als beim herkömmlichen Sinterverfahren. Die Zeit, die die Elektrode der höheren Temperaturen ausgesetzt ist, ist daher insgesamt über den gesamten Temperaturverlauf gesehen sehr gering.

Da bei der Mikrowellensinterung der zu sinternde Gegenstand direkt aufgeheizt wird und nicht der gesamte umgebende Raum, ist gemäß einer bevorzugten Ausführung vorgesehen, unmittelbar um die Elektrode, eine Isolierung anzuordnen. Diese wirkt quasi als Ummantelung und verhindert insbesondere bei höheren Sintertemperaturen eine übermäßige Wärmeabgabe beispielsweise durch Wärmestrahlung.

Zweckdienlicherweise findet die Sinterung innerhalb eines Mikrowellenofens statt, der zumindest einen beweglichen Reflektor für die Mikrowellen aufweist. Dadurch wird eine homogene Erwärmung der Elektrode mit der darauf angebrachten Feststoffschicht ermöglicht. Denn mit dem beweglichen Reflektor lassen sich Temperaturgradienten innerhalb des Bauteils, sogenannte "Hot spots", also lokale Überhitzungen, vermeiden, da die Ausbildung einer ungünstigen Feldverteilung der Mikrowellen vermieden werden kann.

Vorzugsweise oszilliert der Reflektor hierzu während des Sintervorgangs. Damit wird die Mikrowellenleistung gleichmäßig über die Sinterzone verteilt und die Ausbildung von Moden der Mikrowellen verhindert.

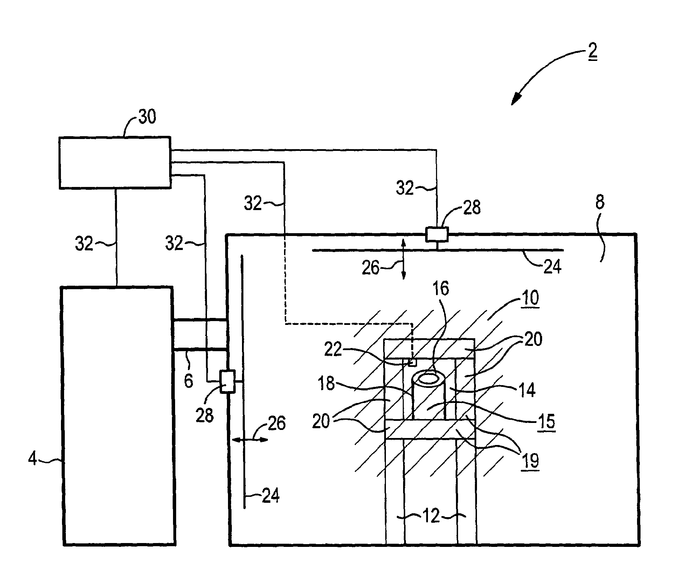

Ein Ausführungsbeispiel der Erfindung wird im Folgenden anhand der Zeichnung näher erläutert. Die einzige Figur der Zeichnung zeigt in schematischer Darstellung eine Anlage zum Mikrowellensintern.

Gemäß der Figur umfasst die Anlage 2 einen Mikrowellengenerator 4, in dem die Mikrowellen erzeugt werden. Diese werden über einen Hohlleiter 6 in einen Mikrowellenofen 8 eingekoppelt.

Der Mikrowellenofen 8 weist zentral in seiner Mitte eine durch Schraffur dargestellte Sinterzone 10 auf, innerhalb derer die eigentliche Sinterung erfolgt. In der Sinterzone 10 ist auf einer Probenhalterung 12 ein Probenraum 14 vorgesehen. In diesem befindet sich der zu sinternde Probenkörper 15, nämlich ein poröser keramischer Hohlzylinder, der als Elektrode 16 für eine festkeramische Brennstoffzelle dient, und auf den eine Feststoffschicht 18 aufgebracht ist. Die Feststoffschicht 18 enthält aus Festelektrolytmaterial bestehende Feststoffanteile, die vorzugsweise durch Abscheidung aus einer Suspension auf die Elektrode 16 aufgebracht werden. Die Feststoffschicht 18 wird durch das Sintern verdichtet und bildet dabei eine dünne, gasdichte Festelektrolytschicht mit guter Ionenleitfähigkeit.

Der Probenraum 14 ist von einer Isolierung 19 bevorzugt allseitig umgeben. Die Isolierung 19 ist aus einzelnen Wandsegmenten 20 aufgebaut, die beispielsweise als isolierende Keramikplatten ausgebildet sind oder andere Materialien mit geringer Wärmeleitfähigkeit, wie beispielsweise Wolle oder Fasern, umfassen. Die Isolierung 19 ist insbesondere bei höheren Sintertemperaturen erforderlich, um negative Auswirkungen auf das Sinterergebnis durch Strahlungsverluste zu vermeiden.

Innerhalb des Probenraums 14 ist weiterhin ein Temperatursensor 22 angeordnet, über den die Temperatur des Probenkörpers 15 messbar ist.

Der Mikrowellenofen 8 weist zudem in seinem Deckenbereich und in einem Wandbereich jeweils einen Reflektor 24 für die Mikrowellenstrahlung auf. Die Reflektoren 24 sind in Pfeilrichtung 26 jeweils beweglich gelagert. Zur Bewegung ist jeweils ein Antrieb 28 vorgesehen, über den eine oszillierende oder schwingende Bewegung der Reflektoren 24 ermöglicht ist.

Zur Steuerung des Sinterprozesses ist eine Steuervorrichtung 30 vorgesehen, die über Leitungen 32 mit dem Mikrowellengenerator 4, mit dem Temperatursensor 22 sowie mit den beiden Antrieben 28 in Verbindung steht.

Zum Sintern der Feststoffschicht 18 wird über den Hohlleiter 6 die Mikrowellenleistung in den Mikrowellenofen 8 eingebracht. Die Mikrowellenleistung wird dabei über die Steuereinrichtung 30 eingestellt. Um zu verhindern, dass sich im Bereich des Probenkörpers 15 eine ungünstige Feldverteilung ausbildet, oszillieren die Reflektoren 24 mit einer geeigneten Frequenz, die im Bereich von 0,1-100Hz liegt. Dadurch ist gewährleistet, dass die Mikrowellenleistung homogen in den Probenkörper 15 eingebracht und die Feststoffschicht 18 gleichmäßig gesintert wird.

Über die Steuervorrichtung 30 wird ein vorgegebenes Temperaturprofil gefahren. Und zwar hat sich gezeigt, dass für den speziellen Anwendungsfall des Sinterns einer Feststoffschicht 18 für eine Elektrode 16 zur Ausbildung einer Festelektrolytschicht eine Aufheizrate von 10K/min bis 20K/min besonders günstig ist. Der Probenkörper 15 wird dabei bis zu einer Sintertemperatur im Bereich von etwa 1100°C bis 1200°C aufgeheizt. Auf diesem Temperaturniveau wird die Probe etwa 20 min bis 120 min gehalten und anschließend mit einer der Aufheizrate entsprechenden Kühlrate wieder abgekühlt. Die Temperatur des Probenkörpers 15 wird dabei kontinuierlich über den Temperatursensor 22 erfasst, und die Steuervorrichtung 30 regelt in Abhängigkeit der gemessenen Temperatur die Temperatur des Probenkörpers 15 über die Einstellung der Mikrowellenleistung des Mikrowellengenerators 4.

Der wesentliche Vorteil des Mikrowellensinterns für das spezielle Gebiet der Brennstoffzellen ist darin zu sehen, dass die Sinterung bei relativ geringen Temperaturen und relativ kurzen Sinterzeiten erfolgt, und dass mit dem Mikrowellensintern ein im Vergleich zu dem Sintern in einem herkömmlichen Sinterofen eine höhere Verdichtung erreicht wird. Die hohe Verdichtung ist für eine Elektrolytschicht einer Brennstoffzelle wesentlich, da sie weitgehend gasdicht sein muss, um einen direkten Kontakt zwischen dem Brennstoff und dem Sauerstoff beim Betrieb der Brennstoffzelle zu vermeiden. Die geringe Sintertemperatur und die kurzen Prozesszeiten beim Sintern haben den Vorteil, dass zwischen der Elektrode 16 und der Feststoffschicht 18 die Ausbildung einer Fremdphasenschicht vollständig oder zumindest weitgehend unterbleibt. Maßgebend hierfür ist das Einfrieren von Diffusionsprozessen, die bei den hohen Temperaturen beim Sintern in einem herkömmlichen Sinterofen zwangsläufig auftreten. Eine solche Fremdphasenschicht bildet einen Widerstand für die Ionenbeweglichkeit in dem Schichtsystem einer Brennstoffzelle bestehend aus Anode- Festelektrolytschicht-Katode. Durch die Verwendung des Mikrowellensinterns wird daher die Effizienz sowie die Qualität der Brennstoffzelle deutlich verbessert.

## Patentansprüche

1. Verfahren zum Aufbringen einer Festelektrolytschicht auf eine Elektrode (16), insbesondere auf eine poröse Elektrode für eine festkeramische Brennstoffzelle, bei der auf die Elektrode eine Feststoffschicht (18) aus Festelektrolytmaterial aufgebracht wird, **dadurch gekennzeichnet, dass** zur Ausbildung der Festelektrolytschicht die Feststoffschicht (18) durch Einstrahlung von Mikrowellen gesintert wird.

2. Verfahren nach Anspruch 1, **dadurch gekennzeichnet, dass** die Mikrowellenleistung in Abhängigkeit einer für die Feststoffschicht (18) ermittelten Temperatur zur Ausbildung eines bestimmten Temperaturverlaufs eingestellt wird.

3. Verfahren nach Anspruch 1 oder 2, **dadurch gekennzeichnet, dass** eine Sintertemperatur im Bereich von etwa 1100°C bis 1300°C eingestellt wird.

4. Verfahren nach einem der vorhergehenden Ansprüche, **dadurch gekennzeichnet, dass** die Sintertemperatur etwa 20 min bis 120 min gehalten wird.

5. Verfahren nach einem der vorhergehenden Ansprüche, **dadurch gekennzeichnet, dass** eine Aufheizrate von etwa 10K/min bis 20K/min eingestellt wird.

6. Verfahren nach einem der vorhergehenden Ansprüche, **dadurch gekennzeichnet, dass** nach dem Sintern eine Abkühlrate von etwa 10K/min bis 20K/min eingestellt wird.

7. Verfahren nach einem der vorhergehenden Ansprüche, **dadurch gekennzeichnet, dass** die Elektrode (16) von einer Isolierung (19) unmittelbar umgeben ist.

8. Verfahren nach einem der vorhergehenden Ansprüche, **dadurch gekennzeichnet, dass** die Sinterung innerhalb eines Mikrowellenofens (8) stattfindet, der zumindestens einen beweglichen Reflektor (24) für die Mikrowellen aufweist.

9. Verfahren nach Anspruch 8, **dadurch gekennzeichnet, dass** der Reflektor (24) während des Sintervorgangs oszilliert.
